# EUROPEAN PATENT SPECIFICATION

(11) **EP 2 067 314 B1**
(45) Date of publication and mention of the grant of the patent: **17.11.2010**
(21) Application number: 07823159.4
(22) Date of filing: 27.09.2007
(51) Int. Cl.: H04L 12/56

(54) **RESOURCE ALLOCATION IN WIRELESS COMMUNICATIONS SYSTEM**
ZUTEILUNG VON RESSOURCEN IN EINEM DRAHTLOSEN KOMMUNIKATIONSSYSTEM
ATTRIBUTION DE RESSOURCES DANS UN SYSTÈME DE COMMUNICATIONS SANS FIL

(30) Priority: 28.09.2006 FI 20065605
(43) Date of publication of application: 10.06.2009
(73) Proprietor: TELIASONERA AB, 10663 Stockholm (SE)
(72) Inventor: HUOVIALA, Rauno, FI-00530 Helsinki (FI); SVAHNSTRÖM, Niclas, 00100 Helsinki (FI)
(74) Representative: Äkräs, Tapio Juhani
(86) International application number: PCT/FI2007/050522
(87) International publication number: WO 2008/037853

(56) References cited:
- WO-A-02/28135
- WO-A-2004/060002
- US-A- 5 732 076
- OLIVER T W YU ET AL: "Adaptive Resource Allocation for Prioritized Call Admission over an ATM-Based Wireless PCN" IEEE JOURNAL ON SELECTED AREAS IN COMMUNICATIONS, IEEE SERVICE CENTER, PISCATAWAY, US, vol. 15, no. 7, September 1997 (1997-09), XP011054698 ISSN: 0733-8716
- "MBMS Signalling Flows for UEs in Idle Mode" TSG-RAN WG2 MEETING #33, XX, XX, 15 November 2002 (2002-11-15), pages 1-3, XP002288252

## Description

### FIELD OF THE INVENTION

The present invention relates to a method of allocating backhaul network resources to user terminals by utilizing access points of another network, such as a WLAN (Wireless Local Area Network).

### BACKGROUND OF THE INVENTION

Wireless links are used as backhauls for wireless access networks e.g. in rural areas where it is expensive to build wired links. A backhaul link may be provided by means of a radio access network using a selected radio network technology, such as HSDPA (High-speed Downlink Packet Access), WiMAX (Worldwide Interoperability for Microwave Access) or flash-OFDM, while hot spots for network access may be built using another radio technology, such as WLAN. In wireless LAN technology, user terminals are provided with wireless LAN connections in order to access, for instance, the Internet through wireless LAN access points which are mainly located in "hot spots". The backhaul network technologies usually allocate their radio resources to end-users in time division and round robin manner.

US 5 732 076 discloses allocating communication resources according to user needs. The system comprises several base stations located in a same cell. A TDD base station communicates with the terminals by using a first protocol, and a GSM base station communicates with the terminals by using a second protocol. If the time slots reserved for the GSM base station are full, it may request more time slot resources from the TDD base station.

WO 2004/060002 A1 discloses a method and an apparatus for allocating RF resources in multi-standard wireless communications systems, capable of dynamically allocating limited RF resources to co-existing wireless schemes according to the requirements.

A problem associated with the above arrangement is that when allocating resources, the network providing the backhaul link logically treats the access point located in the hot spot network as one end-user. This means that if several end-users are simultaneously accessing the network through the hot spot, they have to share an amount of resources that corresponds to an amount of resources the backhaul network would provide to a single end-user. At the same time, an end-user directly accessing the backhaul network receives an amount of resources equal to that received by the hot spot end-users altogether.

### BRIEF DESCRIPTION OF THE INVENTION

An object of the present invention is thus to provide a method, a communications system and an access point for implementing the method so as to alleviate the above problem. The objects of the invention are achieved by a method and an arrangement which are characterized by what is stated in the independent claims. Embodiments of the invention are disclosed in the dependent claims.

The invention is based on the idea that information on the number of user terminals connected to a hot spot is found out, and the information is provided to a backhaul network. The backhaul network then allocates the backhaul network resources between the user terminals connected to the hot spot and the user terminals connected directly to the backhaul network such that the number of user terminals connected to the hot spot is taken into account.

An advantage of the method and arrangement of the invention is that the network resources can be divided evenly and/or according to operator needs between users directly connected to the backhaul network and users connected to the backhaul network via another wireless network. Thus the allocation of the network resources can be controlled by the operator both in the access network providing the hot spots as well as in the access network providing the backhaul.

### BRIEF DESCRIPTION OF THE DRAWINGS

In the following, the invention will be described in greater detail by means of embodiments with reference to the accompanying drawings, in which
Figure 1 illustrates a communications system according to the present invention;
Figure 2 is a signalling chart illustrating a method according to the present invention;
Figure 3 is a flow chart illustrating how an access point of a wireless access network according to the present invention functions;
Figure 4 is a flow chart illustrating how an access point of a backhaul network according to the present invention functions;
Figure 5 illustrates prioritisation according to an embodiment of the present invention;
Figure 6 illustrates a mesh network according to an embodiment of the present invention.

### DETAILED DESCRIPTION OF THE INVENTION

In the following, preferred embodiments of the invention will be described with reference to a wireless communications system, such as UMTS (Universal Mobile Telecommunications System), WCDMA (Wideband Code Division Multiple Access), HSDPA, WiMAX, OFDM or WLAN. This invention is not, however, meant to be restricted to these embodiments. Consequently, the invention may be applied to any wireless or mobile communications system capable of providing a packet switched radio service. Especially the specifications of 3rd generation (3G) mobile communications systems advance rapidly. This may require additional changes to the invention. For this reason, the terminology and the expressions used should be interpreted in their broadest sense since they are meant to illustrate the invention and not to restrict it. The relevant inventive aspect is the functionality concerned, not the network element or equipment where it is executed.

HSDPA is a feature of the WCDMA, providing high data rate transmission on the downlink to support multimedia services. HSDPA provides 3G terminals with high-speed data delivery, ensuring that users requiring effective multimedia capabilities benefit from data rates previously unavailable because of limitations in the radio access network RAN.

WiMAX has been defined by the WiMAX Forum to promote conformance and interoperability of the WLAN standard. The WiMAX refers to a wireless technology that provides high-throughput broadband connections over long distances. It can be used for a number of applications, including "last mile" broadband connections, hotspots and cellular backhaul, and high-speed enterprise connectivity for business. The WiMAX provides increased bandwidth and stronger encryption. It makes use of multi-path signals, and enables connectivity to be provided between network endpoints without direct line of sight. The use of WiMAX for "last mile" connectivity may result in better price-points in both business and home applications, and WiMAX enables broadband access in areas with no existing physical cable or telephone networks.

OFDM is an FDM (Frequency Division Multiplexing) modulation technique for transmitting large amounts of digital data over a radio wave. OFDM operates by splitting a radio signal into multiple smaller sub-signals that are then transmitted simultaneously to the receiver at different frequencies. OFDM enables the amount of disturbance to be reduced in signal transmissions.

Flash-OFDM is a signal processing scheme that supports high data rates at very low packet and delay losses, also known as latencies, over a distributed all-IP wireless network. Such low-latency enables real-time mobile interactive and multimedia applications. It delivers a higher quality wireless service and improves the cost effectiveness of the wireless data technologies.

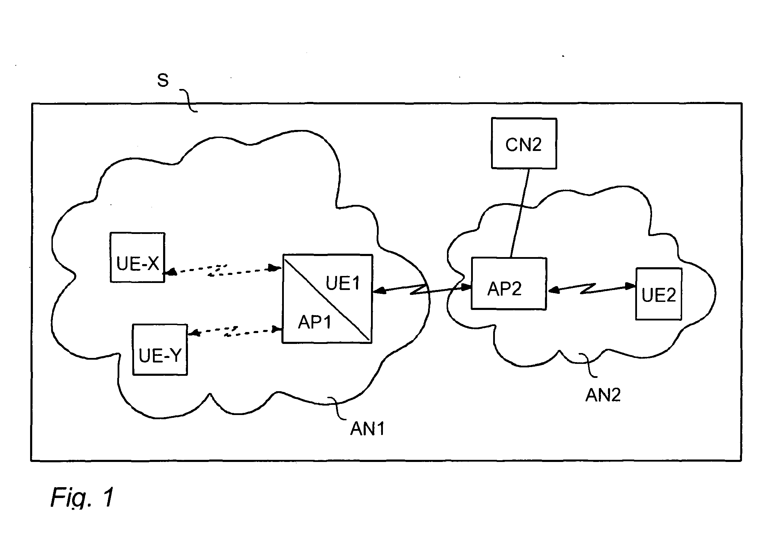

Figure 1 illustrates a communications system S according to an embodiment of the present solution. Figure 1 shows a simplified version of the network architecture, only illustrating components that are essential to the invention, even though those skilled in the art naturally know that a general wireless or mobile communications system also comprises other functions and structures, which do not have to be described in more detail herein. In Figure 1, the telecommunications system S comprises two access networks AN1 and AN2. A first access network AN1 is, for example, a WLAN network, and it comprises a first access point AP1 with which user terminals UE-X and UE-Y within the coverage area of AP1 may communicate. A second access network AN2 comprises a second access point AP2 with which a user terminal UE2 within the coverage area of AP2 may communicate. The radio link between AP1 and UE-X, as well as a radio link between AP1 and UE-Y, is implemented by utilizing a first radio technology, such as WLAN. A radio link between AP1 and AP2, as well as a radio link between AP2 and UE2, is implemented as a backhaul link by utilizing a second radio technology, such as HSDPA, WiMAX or flash-OFDM. The second access point AP2 may be connected to a core network CN2 by utilizing a wired link, such as an optical fiber or a copper cable link. From the point of view of AP2, AP1 represents a user terminal UE1 capable of communicating with AP2 by utilizing the backhaul link between AP1 and AP2. The access points AP1, AP2 may also be referred to as base stations. It should be noted that in addition to AN1, also other access networks may or may not be served by the backhaul network AN2.

Thus, a first radio access network AN1 is provided, implemented with a first radio technology (e.g. WLAN), and a second radio access network AN2, implemented with a second radio technology (e.g. HSDPA). The second access network AN2 is used for end-user network access, as well as a backhaul link for the hot spot network, by means of the second radio technology. In a way, the hot spot base station AP1 resembles a user terminal UE1 connected to the second access network AN2.

In previous solutions, when considering a case where several users UE-X, UE-Y reside in the hot spot AP1, and one user terminal UE2 directly in the backhaul-providing network AN2, the resources of AP2 would not be evenly divided between the end-users UE-X, UE-Y, UE2. The two users UE-X, UE-Y in the hot spot AP1 would have to share an amount of resources similar to that received by the single user terminal UE2 in the second network AN2 alone.

In the present solution, a new functionality is added to the base station AP1 of the hot spot and to the base station AP2 of the backhaul network, which enables the resources to be divided evenly (or, if desired, according to operator needs). The hot spot base station AP1 is aware of the number of end-users UE-X, UE-Y currently residing within the hot spot AP1. The present solution is based on the idea that information on the number of user terminals UE-X, UE-Y currently connected to the hot spot AP1 is transmitted from the hot spot base station AP1 to an RRM (Radio Resource Management, not shown in the figures) functionality of the backhaul-providing network AN2. The RRM functionality may reside e.g. in the base station AP2 and/or in a radio network controller (not shown) of the backhaul network AN2. The RRM is then arranged to adopt the resource scheduling according to the number of end-users UE-X, UE-Y in the hot spot AP1 and, if desired, according to the number of end-users UE2 connecting directly through the backhaul network AN2.

The backhaul network resources may be allocated either on the basis of the number of user terminals UE-X, UE-X connected to AP1 only, or on the basis of the number of user terminals UE-X, UE-X connected to AP1 and the number of user terminals UE2 connected to AP2.

According to an embodiment, even scheduling is applied. In such a case, all the end-users UE-X, UE-Y, UE2 receive an equal amount of resources, i.e. the RRM calculates the total number of end-users in AN1 and AN2 cells and divides the total amount of resources evenly. Thus, in the situation shown in Figure 1, the "logical" user terminal UE1 in the hotspot AP1 receives more resources than UE2, as the number of current users in AN1 is higher than the number of current users in AN2 (i.e. 2>1).

According to another embodiment, the hotspot AP1 is prioritised. In such a case, the RRM is arranged to provide more resources to the "logical" user terminal UE1 in the hotspot AP1. There may be a specific (e.g. operator-specific) reason for this, or the hotspot AP1 usage may be encouraged due to a better coverage and/or less interference that may be achieved.

According to yet another embodiment, direct users UE2 in the second network AN2 are prioritised. A reason to prioritise the user terminal UE2 directly connected through the backhaul network AN2 may be because the hotspot AP1 may be a secondary customer to the backhaul operator, or because the pricing may be different in direct AP2 access.

The present solution thus provides a resources allocation scheme that enables the resources to be evenly divided between the end-users UE-X, UE-Y in the hot spot AP1 and the end-users UE2 directly accessing the backhaul network AN2. If no even division is desired, the present solution also enables the resources to be devided, for example, according to the needs of the network operator.

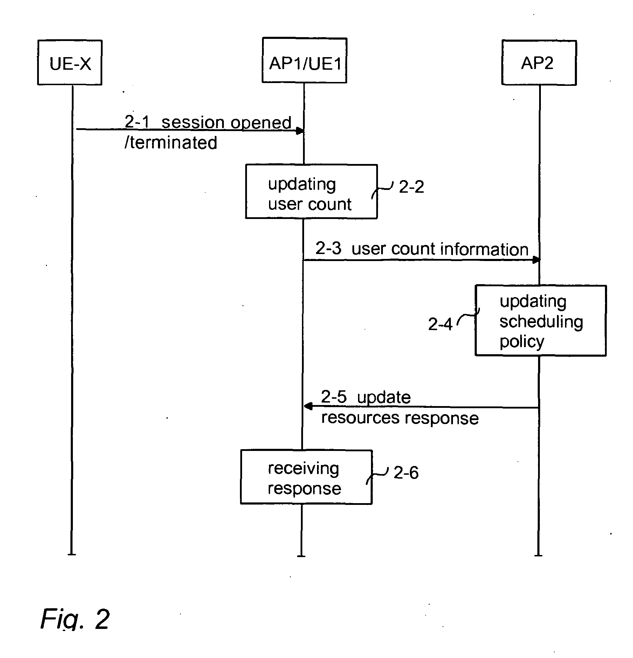

Figure 2 illustrates signalling according to an embodiment of the present solution. At first, a user terminal UE-X connects 2-1 to a first access point AP1 (or alternatively disconnects from the AP1). Thus the number of user terminals served by AP1 changes, and this change is acknowledged in step 2-2 by the first access point AP1. Step 2-2 is carried out either by periodically requesting the number of users or on the basis of event-based reporting in the AP1. The event-based reporting refers to the AP1 recognizing if a user terminal starts or ends a session with AP1. Thus the first access point is able to update 2-2 the user count. Next, a change in the resources is requested by transmitting an update resources request message 2-3 from UE1 to an RRM functionality (which may be located in a second access point AP2 or some other network element in AN2). The message 2-3 may include information on the number of user terminals recently connected/disconnected to/from AP1, and/or information on the total number of user terminals in AP1. In step 2-4, an RRM algorithm calculates a new scheduling policy for user terminals/access points served by AP2, and AP2 starts to allocate the modified radio resources to UE1/AP1 and UE2. In a message 2-5, a response is transmitted to UE1/AP1, indicating that the requested resource update action has been carried out (or rejected if for some reason prohibited). In step 2-6, the response is received by AP1/UE1. The updated resources can now be utilized by the user terminals UE-X, UE-Y, UE2 (unless the update request was rejected).

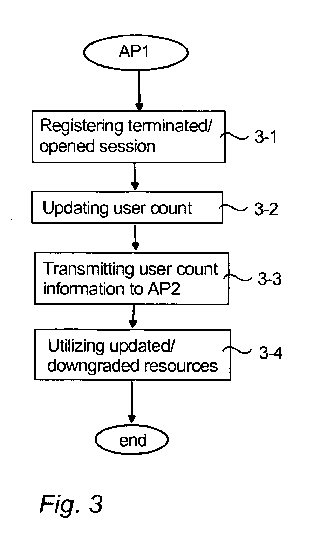

Figure 3 illustrates the operation of a first access point AP1 located in a first access network AN1. In step 3-1, an opening/termination of a session between the access point AP1 and a user terminal UE-X, UE-Y is registered. Step 3-1 is carried out either by periodically requesting the number of users terminals or on the basis of event-based reporting. Thus a user count can be updated in step 3-2. Next, a change in resources is requested by transmitting 3-3 an update resources request message to the RRM functionality located in a second access point AP2 (or some other network element in AN2). The message may include information on the number of user terminals recently connected/disconnected to/from AP1, and/or information on the total number of user terminals in AP1. In step 3-4, a response is received in UE1/AP1. indicating that the requested resource update action has been carried out (or rejected if for some reason prohibited).

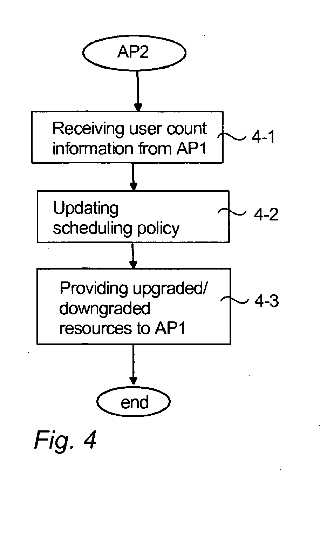

Figure 4 illustrates the operation of a second access point AP2 located in a second access network AN2. In step 4-1, a resource update request message is received from AP1/UE1. The message may include information on the number of user terminals UE-X, UE-Y recently connected to/disconnected to/from AP1, and/or information on the total number of user terminals in AP1. In step 4-2, an RRM functionality (which may be located in the second access point AP2 or some other network element in AN2) calculates a new scheduling policy for user terminals/access points served by AP2, and AP2 starts to schedule the modified radio resources for UE1/AP1 and UE2. In step 4-3, a response is transmitted to UE1/AP1, indicating that the requested resource update action has been carried out (or rejected if for some reason prohibited).

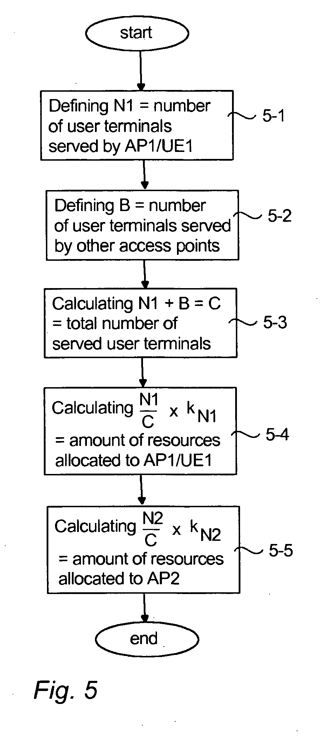

Figure 5 illustrates, by way of example, a prioritisation scheme according to the present invention, by means of which AP2 is able to allocate resources in the network when prioritisation is applied. In step 5-1 of Figure 5, the number of user terminals served by AP1/UE1 is defined as "N1" (based on the information received from AP1 as described above). The number of user terminals served by other access points in the network is defined in step 5-2 as "B". The total number "C" of served user terminals in the network can thus be calculated in step 5-3 as follows: C=N1+B. The amount "R1" of resources allocated to the user terminal AP1/UE1 is calculated in step 5-4 as follows: R1=k_{N1}·N1/C, and the amount "R2" of resources allocated to the user terminal AP1/UE1 can be calculated in step 5-5 as follows: R2=k_{N2}·N2/C, wherein k_{N1} and k_{N2} represent weighting factors by means of which an operator is able to prioritise a respective selected access point AP1, AP2. Thus, by selecting a high value of the corresponding weighting factor, the operator is able to allocate more resources to the access point than suggested by the number of user terminals served by the access point.

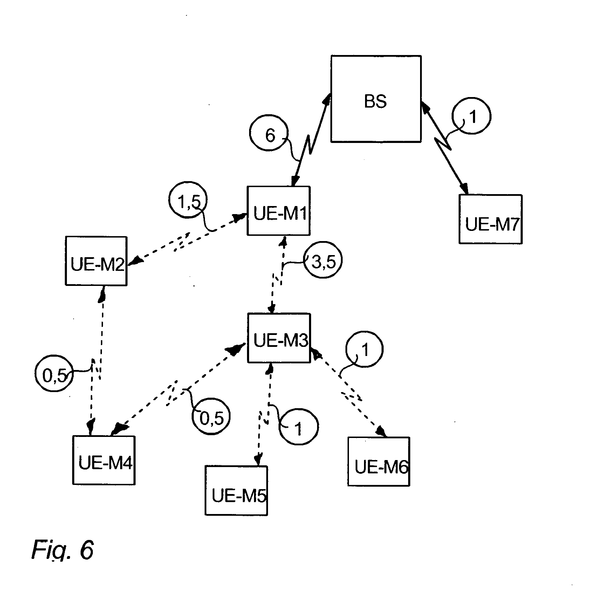

According to yet another embodiment, the present invention is applied to a mesh network where user terminals may also function as access points for other terminals. This embodiment enables the mesh network to be scheduled with a unified and fair mechanism. The embodiment is illustrated by way of a simplified example in Figure 6 in which the functionality according to the embodiment is implemented in access points (i.e. in user terminals) UE-M1, UE-M2, UE-M3, UE-M4, UE-M5, UE-M6, UE-M7. The access point UE-M1, UE-M2, UE-M3 is arranged to report the number of respective active user terminals UE-M2, UE-M3, UE-M4, UE-M5, UE-M6 "below" it in the mesh network hierarchy to an access point BS, UE-M1, UE-M2, UE-M3 which is serving it. The base station BS represents an access point of the backhaul network. The number of active user terminals below the access point is determined on the basis of reports received from the terminals below. The number of user terminals is the actual number of active users in the whole network branch below the access point (+1, if the access point UE-M1, UE-M2, UE-M3 itself is active), not the number of terminals only directly below the access point. In a situation where user terminal is served by more than one access point, the reports can be divided between the respective access points such that resource fairness is restored. In the situation of Figure 6, the user terminal UE-M4 is served by access points UE-M2, UE-M3. In such a case, no further user terminals exist in the hierarchy below UE-M4, but UE-M4 itself is active, so it should report to the access point serving it that the number of access points is 1. As there are two access points UE-M2, UE-M3 serving UE-M4, the value "1" is to be divided by two, i.e. ½ = 0,5. The numbers to be reported by the user terminals to the corresponding access points directly above them are shown in Figure 6.

It should be noted that the RRM functionality and/or the functionality according to the present invention may be located in the hot spot access point and/or in the backhaul access point. On the other hand, the RRM functionality and/or the functionality according to the present invention may be located in a separate network element not shown in the figures (such as in a radio network controller or in an authentication centre, or even in a core network element).

It should be noted that the access point AP1/UE1 is able to obtain information on the number of user terminals UE-X, UE-Y connected to it. The access point AP2 of the backhaul network is able to obtain information on the number of user terminals UE2 connected to AP2.

It should also be noted that herein the term "connect" may also refer to a logical connection (a session) between the user terminal and the access point, although it is obvious to a person skilled in the art that the WLAN and HSDPA are based on a packet-switched data transmission utilizing connectionless protocols.

The items and steps shown in Figures 2, 3 and 4 are simplified, and only aim at describing the idea of the invention. Other items may be used and/or other functions may be carried out between the steps. The items only serve as examples and they may only contain some of the information mentioned above. The items may also include other information, and the titles may deviate from those given above. Instead of or in addition to an access point or a base station, the above described operations may be performed in any other element of a communications system.

In addition to prior art means, a system, networks or network nodes that implement the functionality of the invention comprise means for processing information relating to resource allocation in a manner described above. Existing network nodes and user terminals comprise processors and memory that can be utilized in the operations of the invention. Any changes necessary for implementing the invention may be carried out using supplements or updates of software routines and/or routines included in application specific integrated circuits (ASIC) and/or programmable circuits, such as EPLDs (Electrically Programmable Logic Device) or FPGAs (Field Programmable Gate Array).

It will be obvious to a person skilled in the art that as technology advances, the inventive concept can be implemented in various ways. The invention and its embodiments are not limited to the examples described above but may vary within the scope of the claims.

## Claims

1. A method for allocating network resources in a communications system, the system (S) comprising
a first access point (AP1) of a first wireless network (AN1) utilizing a first radio technology, and
a second access point (AP2) of a backhaul link-providing network (AN2) utilizing a second radio technology, the second access point (AP2) being capable of allocating resources of the backhaul link-providing network to the first access point (AP1, UE1) and the second access point (AP2),
**characterized by**
obtaining (2-2), by the first access point, first information on the number of user terminals (UE-X, UE-Y) accessing the backhaul link-providing network (AN2) through the first access point (AP1);
providing (2-3), by the first access point, said first information to the second access point; and
allocating, by the second access point, the resources of the backhaul link-providing network to the first access point (AP1) and to the second access point (AP2) on the basis of said first information.

2. A method as claimed in claim 1, **characterized by** obtaining second information on the number of user terminals (UE2) connected to the second access point (AP2); and
allocating the backhaul, link-providing network resources to the first access point (AP1) and the second access point (AP2) on the basis of said first information and said second information.

3. A method as claimed in claim 1 or 2, **characterized by** checking (22), in the first access point (AP1), the number of user terminals connected to the first access point (AP1);
transmitting (2-3), from the first access point (AP1) to the second access point (AP2), the first information on the number of user terminals communicating with the first access point (IAP1);
receiving (2-4) said first information in the second access point (AP2); and
dividing (2-4, 2-5) the backhaul link-providing network resources between the user terminals on the basis of said information.

4. A method as claimed in claim 1, 2 or 3, **characterized by** updating the information on the number of user terminals (UE-X, UE-Y) connected to the first access point (AP1) as a response to detecting a predetermined event in the first access network (AN1).

5. A method as claimed in claim 4, **characterized in that** the predefined event comprises a termination of a session between the first access point (AP1) and at least one user terminal (UE-X, UE-Y).

6. A method as claimed in claim 4 or 5, **characterized in that** the predefined event comprises an opening of a session between the first access point (AP1) and at least one user terminal (UE-X, UE-Y).

7. A method as claimed in any of the preceding claims 1-6, **characterized by** updating the information on the number of user terminals connected to the first access point (AP1) at predetermined time intervals.

8. A method as claimed in any of the preceding claims 1-7, **characterized by** allocating the backhaul link-providing network resources equally between the user terminals (UE-X, UE-Y) connected to the first access point (AP1) and the user terminals (UE2) connected to the second access point (AP2).

9. A method as claimed in any of the preceding claims 1-8, **characterized by** allocating the backhaul link-providing network resources such that one or more user terminals (UE-X, UE-Y) connected to the first access point are prioritised.

10. A method as claimed in any of the preceding claims 1-9, **characterized by** allocating the backhaul link-providing network resources such that one or more user terminals (UE2) connected to the second access point are prioritised.

11. A method as claimed in any of the preceding claims 1-10, **characterized in that** the amount of backhaul link-providing network resources allocated to the access point (AP1, AP2) is proportional to a respective weighting factor (k_{N1}, k_{N2}).

12. A method as claimed in any of the preceding claims 1-11, **characterized by** allocating the backhaul link-providing network resources to the user terminal (UE-X, UE-Y) connected to the first access point (AP1) on the basis of a predefined contract between a network operator and a subscriber.

13. A method as claimed in any of the preceding claims 1-12, **characterized by** the first access network (AN1) comprising a mesh network, wherein the method comprises
providing, from a lower-hierarchy user terminal (UE-M2, UE-M3), to at least one upper-hierarchy user terminal (UE-M1), information on the number of active user terminals (UE-M4, UE-M5, UE-M6) below the lower-hierarchy user terminal (UE-M2, UE-M3) in the mesh network hierarchy; and
allocating the backhaul link-providing network resources to the mesh network on the basis of the total number of active user terminals (UE-M1, UE-M2, UE-M3, UE-M4, UE-M5, UE-M6, UE-M7) in the mesh network.

14. A method as claimed in any of the preceding claims 1-13, **characterized in that** the first access network (AN1) comprises a Wireless Local Area Network WLAN.

15. A method as claimed in any of the preceding claims 1-14, **characterized in that** the backhaul link-providing network (AN2) utilizes High-speed Downlink Packet Access HSDPA, Worldwide Interoperability for Microwave Access WiMAX, and/or flash-Orthogonal Frequency Division Multiplexing, flash-OFDM.

16. A communications system (S) comprising
a first access point (AP1) of a wireless network (AN1) utilizing a first radio technology, and
a second access point (AP2) of a backhaul link-providing network (AN2) utilizing a second radio technology, wherein the second access point (AP2) is capable of allocating resources of the backhaul link-providing network to the first access point (AP1, UE1) and to the second access point (AP2),
**characterized in that** the system is configured to
obtain, by the first access point, first information on the number of user terminals (UE-X, UE-Y) accessing the backhaul link-providing network (AN2) through the first access point (AP1);
provide, by the first access point, said first information to the second access point (AP2); and
allocate, by the second access point, the resources of the backhaul link-providing network to the first access point (AP1) and to the second access point (AP2) on the basis of said first information.

17. A system as claimed in claim 16, **characterized in that** it is configured to allocate the backhaul link-providing network resources to the first access point (AP1) and to the second access point (AP2) on the basis of the number of user terminals (UE-X, UE-Y) connected to the first access point (AP1) as well as the number of user terminals (UE2) connected to the second access point (AP2).

18. A system as claimed in claim 16 or 17, **characterized in that** the first access point (AP1) is arranged to
check the number of user terminals communicating with the first access point (AP1); and
transmit, to the second access point (AP2), information on the number of user terminals communicating with the first access point (AP1);
wherein the second access point (AP2) is arranged to receive said information; and
divide the backhaul link-providing network resources between the user terminals based on said information.

19. A system as claimed in claim 16, 17 or 18, **characterized in that** it is configured to update the information on the number of user terminals (UE-X, UE-Y) connected to the first access point (AP1) as a response to detecting a predefined event in the first access network (AN1).

20. A system as claimed in claim 19, **characterized in that** the predefined event comprises a termination of a session between the first access point (AP1) and at least one user terminal (UE-X, UE-Y).

21. A system as claimed in claim 19 or 20, **characterized in that** the predefined event comprises an opening of a session between the first access point (AP1) and at least one user terminal (UE-X, UE-Y).

22. A system as claimed in any of the preceding claims 16-21, **characterized in that** it is configured to update the information on the number of user terminals connected to the first access point (AP1) at predetermined time intervals.

23. A system as claimed in any of the preceding claims 16-22, **characterized in that** it is configured to allocated the backhaul link-providing network resources equally between the user terminals (UE-X, UE-Y) connected to the first access point (AP1) and the user terminals (UE2) connected to the second access point (AP2).

24. A system as claimed in any of the preceding claim 16-23, **characterized in that** it is configured to allocate the backhaul link-providing network resources such that one or more user terminals (UE-X, UE-Y) connected to the first access point (AP1) are prioritised.

25. A system as claimed in any of the preceding claims 16-24, **characterized in that** it is configured to allocate the backhaul link-providing network resources such that one or more user terminals (UE2) connected to the second access point (AP2) are prioritised.

26. A system as claimed in any of the preceding claims 16-25, **characterized in that** it is configured to allocate the backhaul link-providing network resources to the access point (AP1, AP2) such that the amount of allocated resources is proportional to a respective weighting factor (k_{N1}, k_{N2}).

27. A system as claimed in any of the preceding claims 16-26, **characterized in that** it is configured to allocate the backhaul link-providing network resources to the user terminal (UE-X, UE-Y) connected to the first access point (AP1) on the basis of a predefined contract between a network operator and a subscriber.

28. A system as claimed in any of the preceding claims 16-27, **characterized in that** the first access network (AN1) comprises a mesh network, wherein the system is configured to
provide, from a lower-hierarchy user terminal (UE-M2, UE-M3), to at least one upper-hierarchy user terminal (UE-M1), information on the number of active user terminals (UE-M4, UE-M5, UE-M6) below the lower-hierarchy user terminal (UE-M2, UE-M3) in the mesh network hierarchy; and
allocate the backhaul link-providing network resources to the mesh network on the basis of the total number of active user terminals (UE-M1, UE-M2, UE-M3, UE-M4, UE-M5, UE-M6, UE-M7) in the mesh network.

29. A system as claimed in any of the preceding claims 16-28, **characterized in that** the first access network (AN1) comprises a Wireless Local Area Network WLAN.

30. A system as claimed in any of the preceding claims 16-29, **characterized in that** the backhaul link-providing network (AN2) is arranged to utilize High-speed Downlink Packet Access HSDPA, Worldwide Interoperability for Microwave Access WiMAX, and/or flash-Orthogonal Frequency Division Multiplexing, flash-OFDM.

31. A first access point (AP1) for a wireless access network utilizing a first radio technology, **characterized in that** it is configured to
obtain first information on the number of user terminals (UE-X, UE-Y)accessing a backhaul-link providing network (AN2) through the first access point (AP1), the backhaul-link providing network (AN2) comprising a second access point (AP2) and utilizing a second radio technology; and
provide said first information to the second access point (AP2).

32. A second access point (AP2) of a backhaul link-providing network (AN2), **characterized in that** it is configured to
receive first information on the number of user terminals (UE-X, UE-Y) accessing the backhaul link-providing network through a first access point (AP1) of a first wireless network utilizing a first radio technology, the backhaul link-providing network utilizing a second radio technology; and
allocate resources of the backhaul link-providing network to the first access point (AP1) and to the second access point (AP2) on the basis of the first information.

## Patentansprüche

1. Verfahren zur Zuordnung von Netzressourcen in einem Kommunikationssystem, welches System (S) aufweist:
einen ersten Zugangspunkt (AP1) eines eine erste Funktechnologie nutzenden ersten drahtlosen Netzes (AN1) und
einen zweiten Zugangspunkt (AP2) eines eine zweite Funktechnologie nutzenden Backhaul-Link bereitstellenden Netzes (AN2), wobei der zweite Zugangspunkt (AP2) fähig ist, Ressourcen des Backhaul-Link bereitstellenden Netzes dem ersten Zugangspunkt (AP1, UE1) und dem zweiten Zugangspunkt (AP2) zuzuordnen,
**dadurch gekennzeichnet, dass**
erste Informationen über die Anzahl von auf das Backhaul-Link bereitstellende Netz (AN2) über den ersten Zugangspunkt (AP1) zugreifenden Benutzerstationen (UE-X, UE-Y) vom ersten Zugangspunkt erhalten werden (2-2);
die besagten ersten Informationen vom ersten Zugangspunkt dem zweiten Zugangspunkt bereitgestellt werden (2-3); und
die Ressourcen des Backhaul-Link bereitstellenden Netzes (AP1) vom zweiten Zugangspunkt dem ersten Zugangspunkt (AP1) und dem zweiten Zugangspunkt (AP2) aufgrund der besagten ersten Informationen zugeordnet werden.

2. Verfahren nach Anspruch 1, **gekennzeichnet durch**:
Erhalten von zweiten Informationen über die Anzahl von mit dem zweiten Zugangspunkt (AP2) verbundenen Benutzerstationen (UE2) und
Zuordnen der Ressourcen des Backhaul-Link bereitstellenden Netzes dem ersten Zugangspunkt (AP1) und dem zweiten Zugangspunkt (AP2) aufgrund der besagten ersten Informationen und der besagten zweiten Informationen.

3. Verfahren nach Anspruch 1 oder 2, **dadurch gekennzeichnet,dass**
die Anzahl von mit dem ersten Zugangspunkt (AP1) verbundenen Benutzerstationen im ersten Zugangspunkt (AP1) überprüft wird (2-2);
die ersten Informationen über die Anzahl von mit dem ersten Zugangspunkt (AP1) kommunizierenden Benutzerstationen vom ersten Zugangspunkt (AP1) dem zweiten Zugangspunkt (AP2) übertragen werden (2-3);
die besagten ersten Informationen im zweiten Zugangspunkt (AP2) empfangen werden (2-4); und
die Ressourcen des Backhaul-Link bereitstellenden Netzes zwischen den Benutzerstationen aufgrund der besagten Informationen unterteilt werden (2-4, 2-5).

4. Verfahren nach Anspruch 1, 2 oder 3, **dadurch gekennzeichnet, dass** die Informationen über die Anzahl von mit dem ersten Zugangspunkt (AP1) verbundenen Benutzerstationen (UE-X, UE-Y) als Antwort auf Detektieren eines vorbestimmten Ereignisses im ersten Zugangsnetz (AN1) aktualisiert werden.

5. Verfahren nach Anspruch 4, **dadurch gekennzeichnet, dass** das vorbestimmte Ereignis eine Beendigung einer Sitzung zwischen dem ersten Zugangspunkt (AP1) und zumindest einer Benutzerstation (UE-X, UE-Y) aufweist.

6. Verfahren nach Anspruch 4 oder 5, **dadurch gekennzeichnet, dass** das vorbestimmte Ereignis eine Eröffnung einer Sitzung zwischen dem ersten Zugangspunkt (AP1) und zumindest einer Benutzerstation (UE-X, UE-Y) aufweist.

7. Verfahren nach einem der vorhergehenden Ansprüche 1 bis 6, **dadurch gekennzeichnet, dass** die Informationen über die Anzahl von mit dem ersten Zugangspunkt (AP1) verbundenen Benutzerstationen zu vorbestimmten Zeitintervallen aktualisiert werden.

8. Verfahren nach einem der vorhergehenden Ansprüche 1 bis 7, **dadurch gekennzeichnet, dass** die Ressourcen des Backhaul-Link bereitstellenden Netzes gleichmäßig zwischen den mit dem ersten Zugangspunkt (AP1) verbundenen Benutzerstationen (UE-X, UE-Y) und den mit dem zweiten Zugangspunkt (AP2) verbundenen Benutzerstationen (UE2) zugeordnet werden.

9. Verfahren nach einem der vorhergehenden Ansprüche 1 bis 8, **dadurch gekennzeichnet, dass** die Ressourcen des Backhaul-Link bereitstellenden Netzes derart zugeordnet werden, dass eine oder mehr mit dem ersten Zugangspunkt verbundene Benutzerstationen (UE-X, UE-Y) priorisiert werden.

10. Verfahren nach einem der vorhergehenden Ansprüche 1 bis 9, **dadurch gekennzeichnet, dass** die Ressourcen des Backhaul-Link bereitstellenden Netzes derart zugeordnet werden, dass eine oder mehr mit dem zweiten Zugangspunkt verbundene Benutzerstationen (UE2) priorisiert werden.

11. Verfahren nach einem der vorhergehenden Ansprüche 1 bis 10, **dadurch gekennzeichnet, dass** die Menge von dem Zugangspunkt (AP1, AP2) zugeordneten Ressourcen des Backhaul-Link bereitstellenden Netzes proportional zu einem entsprechenden Gewichtungsfaktor (k_{N1}, k_{N2}) ist.

12. Verfahren nach einem der vorhergehenden Ansprüche 1 bis 11, **dadurch gekennzeichnet, dass** die Ressourcen des Backhaul-Link bereitstellenden Netzes der mit dem ersten Zugangspunkt (AP1) verbundenen Benutzerstation (UE-X, UE-Y) aufgrund eines vorbestimmten Vertrags zwischen einem Netzbetreiber und einem Teilnehmer zugeordnet werden.

13. Verfahren nach einem der vorhergehenden Ansprüche 1 bis 12, **dadurch gekennzeichnet, dass** das erste Zugangsnetz (AN1) ein Maschennetz aufweist, wobei beim Verfahren
Informationen von einer Benutzerstation (UE-M2, UE-M3) unterer Hierarchie zumindest einer Benutzerstation (UE-M1) oberer Hierarchie über die Anzahl aktiver Benutzerstationen (UE-M4, UE-M5, UE-M6) unter der Benutzerstation (UE-M2, UE-M3) unterer Hierarchie in der Maschennetzhierarchie bereitgestellt werden; und
die Ressourcen des Backhaul-Link bereitstellenden Netzes dem Maschennetz aufgrund der Gesamtzahl aktiver Benutzerstationen (UE-M1, UE-M2, UE-M3, UE-M4, UE-M5, UE-M6, UE-M7) im Maschennetz zugeordnet werden.

14. Verfahren nach einem der vorhergehenden Ansprüche 1 bis 13, **dadurch gekennzeichnet, dass** das erste Zugangsnetz (AN1) ein drahtloses lokales Datennetz WLAN aufweist.

15. Verfahren nach einem der vorhergehenden Ansprüche 1 bis 14, **dadurch gekennzeichnet, dass** das Backhaul-Link bereitstellende Netz (AN2) High-speed Downlink Packet Access HSDPA, Worldwide Interoperability for Microwave Access WiMAX und/oder flash-Orthogonal Frequency Division Multiplexing, flash-OFDM, nutzt.

16. Kommunikationssystem (S) mit
einem ersten Zugangspunkt (AP1) eines eine erste Funktechnologie nutzenden drahtlosen Netzes (AN1) und
einem zweiten Zugangspunkt (AP2) eines eine zweite Funktechnologie nutzenden Backhaul-Link bereitstellenden Netzes (AN2), wobei der zweite Zugangspunkt (AP2) fähig ist, Ressourcen des Backhaul-Link bereitstellenden Netzes dem ersten Zugangspunkt (AP1, UE1) und dem zweiten Zugangspunkt (AP2) zuzuordnen,
**dadurch gekennzeichnet, dass** das System konfiguriert ist,
erste Informationen über die Anzahl von auf das Backhaul-Link bereitstellende Netz (AN2) über den ersten Zugangspunkt (AP1) zugreifenden Benutzerstationen (UE-X, UE-Y) vom ersten Zugangspunkt zu erhalten;
die besagten ersten Informationen vom ersten Zugangspunkt dem zweiten Zugangspunkt (AP2) bereitzustellen; und
die Ressourcen des Backhaul-Link bereitstellenden Netzes vom zweiten Zugangspunkt dem ersten Zugangspunkt (AP1) und dem zweiten Zugangspunkt (AP2) aufgrund der besagten ersten Informationen zuzuordnen.

17. System nach Anspruch 16, **dadurch gekennzeichnet, dass** es konfiguriert ist, die Ressourcen des Backhaul-Link bereitstellenden Netzes dem ersten Zugangspunkt (AP1) und dem zweiten Zugangspunkt (AP2) aufgrund der Anzahl von mit dem ersten Zugangspunkt (AP1) verbundenen Benutzerstationen (UE-X, UE-Y) sowie der Anzahl von mit dem zweiten Zugangspunkt (AP2) verbundenen Benutzerstationen (UE2) zuzuordnen.

18. System nach Anspruch 16 oder 17, **dadurch gekennzeichnet, dass** der erste Zugangspunkt (AP1) angeordnet ist,
die Anzahl von mit dem ersten Zugangspunkt (AP1) kommunizierenden Benutzerstationen zu überprüfen; und
Informationen über die Anzahl von mit dem ersten Zugangspunkt (AP1) kommunizierenden Benutzerstationen dem zweiten Zugangspunkt (AP2) zu übertragen;
wobei der zweite Zugangspunkt (AP2) angeordnet ist,
die besagten Informationen zu empfangen; und
die Ressourcen des Backhaul-Link bereitstellenden Netzes zwischen den Benutzerstationen aufgrund der besagten Informationen zu unterteilen.

19. System nach Anspruch 16, 17 oder 18, **dadurch gekennzeichnet, dass** es konfiguriert ist, die Informationen über die Anzahl von mit dem ersten Zugangspunkt (AP1) verbundenen Benutzerstationen (UE-X, UE-Y) als Antwort auf Detektieren eines vorbestimmten Ereignisses im ersten Zugangsnetz (AN1) zu aktualisieren.

20. System nach Anspruch 19, **dadurch gekennzeichnet, dass** das vorbestimmte Ereignis eine Beendigung einer Sitzung zwischen dem ersten Zugangspunkt (AP1) und zumindest einer Benutzerstation (UE-X, UE-Y) aufweist.

21. System nach Anspruch 19 oder 20, **dadurch gekennzeichnet, dass** das vorbestimmte Ereignis eine Eröffnung einer Sitzung zwischen dem ersten Zugangspunkt (AP1) und zumindest einer Benutzerstation (UE-X, UE-Y) aufweist.

22. System nach einem der vorhergehenden Ansprüche 16 bis 21, **dadurch gekennzeichnet, dass** es konfiguriert ist, die Informationen über die Anzahl von mit dem ersten Zugangspunkt (AP1) verbundenen Benutzerstationen zu vorbestimmten Zeitintervallen zu aktualisieren.

23. System nach einem der vorhergehenden Ansprüche 16 bis 22, **dadurch gekennzeichnet, dass** es konfiguriert ist, die Ressourcen des Backhaul-Link bereitstellenden Netzes gleichmäßig zwischen den mit dem ersten Zugangspunkt (AP1) verbundenen Benutzerstationen (UE-X, UE-Y) und den mit dem zweiten Zugangspunkt (AP2) verbundenen Benutzerstationen (UE2) zuzuordnen.

24. System nach einem der vorhergehenden Ansprüche 16 bis 23, **dadurch gekennzeichnet, dass** es konfiguriert ist, die Ressourcen des Backhaul-Link bereitstellenden Netzes derart zuzuordnen, dass eine oder mehr mit dem ersten Zugangspunkt (AP1) verbundene Benutzerstationen (UE-X, UE-Y) priorisiert werden.

25. System nach einem der vorhergehenden Ansprüche 16 bis 24, **dadurch gekennzeichnet, dass** es konfiguriert ist, die Ressourcen des Backhaul-Link bereitstellenden Netzes derart zuzuordnen, dass eine oder mehr mit dem zweiten Zugangspunkt (AP2) verbundene Benutzerstationen (UE-2) priorisiert werden.

26. System nach einem der vorhergehenden Ansprüche 16 bis 25, **dadurch gekennzeichnet, dass** es konfiguriert ist, die Ressourcen des Backhaul-Link bereitstellenden Netzes dem Zugangspunkt (AP1, AP2) derart zuzuordnen, dass die Menge von zugeteilten Ressourcen proportional zu einem entsprechenden Gewichtungsfaktor (k_{N1}, k_{N2}) ist.

27. System nach einem der vorhergehenden Ansprüche 16 bis 26, **dadurch gekennzeichnet, dass** es konfiguriert ist, die Ressourcen des Backhaul-Link bereitstellenden Netzes der mit dem ersten Zugangspunkt (AP1) verbundenen Benutzerstation (UE-X, UE-Y) aufgrund eines vorbestimmten Vertrags zwischen einem Netzbetreiber und einem Teilnehmer zuzuordnen.

28. System nach einem der vorhergehenden Ansprüche 16 bis 27, **dadurch gekennzeichnet, dass** das erste Zugangsnetz (AN1) ein Maschennetz aufweist, wobei das System konfiguriert ist,
Informationen von einer Benutzerstation (UE-M2, UE-M3) unterer Hierarchie zumindest einer Benutzerstation (UE-M1) oberer Hierarchie über die Anzahl aktiver Benutzerstationen (UE-M4, UE-M5, UE-M6) unter der Benutzerstation (UE-M2, UE-M3) unterer Hierarchie in der Maschennetzhierarchie bereitzustellen; und
die Ressourcen des Backhaul-Link bereitstellenden Netzes dem Maschennetz aufgrund der Gesamtzahl aktiver Benutzerstationen (UE-M1, UE-M2, UE-M3, UE-M4, UE-M5, UE-M6, UE-M7) im Maschennetz zuzuordnen.

29. System nach einem der vorhergehenden Ansprüche 16 bis 28, **dadurch gekennzeichnet, dass** das erste Zugangsnetz (AN1) ein drahtloses lokales Datennetz WLAN aufweist.

30. System nach einem der vorhergehenden Ansprüche 16 bis 29, **dadurch gekennzeichnet, dass** das Backhaul-Link bereitstellende Netz (AN2) angeordnet ist, High-speed Downlink Packet Access HSDPA, Worldwide Interoperability for Microwave Access WiMAX und/oder flash-Orthogonal Frequency Division Multiplexing, flash-OFDM, zu nutzen.

31. Erster Zugangspunkt (AP1) für ein eine erste Funktechnologie nutzendes drahtloses Zugangsnetz, **dadurch gekennzeichnet, dass** er konfiguriert ist,
erste Informationen über die Anzahl von auf das Backhaul-Link bereitstellende Netz (AN2) über den ersten Zugangspunkt (AP1) zugreifenden Benutzerstationen (UE-X, UE-Y) zu erhalten, wobei das Backhaul-Link bereitstellende Netz (AN2) einen zweiten Zugangspunkt (AP2) aufweist und eine zweite Funktechnologie nutzt; und
die besagten ersten Informationen dem zweiten Zugangspunkt (AP2) bereitzustellen.

32. Zweiter Zugangspunkt (AP2) eines Backhaul-Link bereitstellenden Netzes (AN2), **dadurch gekennzeichnet, dass** er konfiguriert ist,
erste Informationen über die Anzahl von auf das Backhaul-Link bereitstellende Netz über einen ersten Zugangspunkt (AP1) eines eine erste Funktechnologie nutzenden ersten drahtlosen Netzes zugreifenden Benutzerstationen (UE-X, UE-Y) zu empfangen, wobei das Backhaul-Link bereitstellende Netz eine zweite Funktechnologie nutzt; und
Ressourcen des Backhaul-Link bereitstellenden Netzes dem ersten Zugangspunkt (AP1) und dem zweiten Zugangspunkt (AP2) aufgrund der ersten Informationen zuzuordnen.

## Revendications

1. Procédé d'attribution de ressources de réseau dans un système de communication, le système (S) comprenant :
un premier point d'accès (AP1) d'un premier réseau sans fil (AN1) utilisant une première technique de radio ; et
un second point d'accès (AP2) d'un réseau (AN2) fournisseur de liaisons de prolongement local utilisant une seconde technique de radio, le second point d'accès (AP2) étant capable d'attribuer des ressources du réseau fournisseur de liaisons de prolongement local au premier point d'accès (AP1, UE1) et au second point d'accès (AP2),
**caractérisé :**
**par** l'obtention (2-2), par le premier point d'accès, d'une première information sur le nombre de terminaux (UE-X, UE-Y) d'utilisateur accédant au réseau (AN2) fournisseur de liaisons de prolongement local par l'intermédiaire du premier point d'accès (AP1) ;
par la fourniture (2-3) de ladite première information par le premier point d'accès au second point d'accès ; et
par l'attribution, par le second point d'accès, des ressources du réseau fournisseur de liaisons de prolongement local au premier point d'accès (AP1) et au second point d'accès (AP2) sur la base de ladite première information.

2. Procédé selon la revendication 1, **caractérisé :**
**par** l'obtention d'une seconde information sur le nombre de terminaux (UE2) d'utilisateur connectés au second point d'accès (AP2) ; et
par l'attribution des ressources de réseau fournisseur de liaisons de prolongement local au premier point d'accès (AP1) et au second point d'accès (AP2) sur la base de ladite première information et de ladite seconde information.

3. Procédé selon la revendication 1 ou 2, **caractérisé :**
**par** la vérification (2-2), dans le premier point d'accès (AP1), du nombre de terminaux d'utilisateur connectés au premier point d'accès (AP1)
par la transmission (2-3), du premier point d'accès (AP1) au second point d'accès (AP2), de la première information sur le nombre de terminaux d'utilisateur communiquant avec le premier point d'accès (AP1) ;
par la réception (2-4) de ladite première information dans ledit second point d'accès (AP2) ; et
par la division (2-4, 2-5), sur la base de ladite information, des ressources de réseau fournisseur de liaisons de prolongement local entre les terminaux d'utilisateur.

4. Procédé selon la revendication 1, 2 ou 3, **caractérisé par** la mise à jour de l'information sur le nombre de terminaux (UE-X, UE-Y) d'utilisateur connectés au premier point d'accès (AP1) comme réponse à la détection d'un événement prédéterminé dans le premier réseau d'accès (AN1).

5. Procédé selon la revendication 4, **caractérisé en ce que** l'événement prédéfini comprend la fin d'une session entre le premier point d'accès (AP1) et au moins un terminal (UE-X, UE-Y) d'utilisateur.

6. Procédé selon la revendication 4 ou 5, **caractérisé en ce que** l'événement prédéfini comprend l'ouverture d'une session entre le premier point d'accès (AP1) et au moins un terminal (UE-X, UE-Y) d'utilisateur.

7. Procédé selon l'une quelconque des revendications 1 à 6 précédentes, **caractérisé par** la mise à jour, à des intervalles prédéterminés de temps, de l'information sur le nombre de terminaux d'utilisateur connectés au premier point d'accès (AP1).

8. Procédé selon l'une quelconque des revendications 1 à 7 précédentes, **caractérisé par** l'attribution des ressources de réseau fournisseur de liaisons de prolongement local de manière égale entre les terminaux (UE-X, UE-Y) d'utilisateur connectés au premier point d'accès (AP1) et les terminaux (UE2) d'utilisateur connectés au second point d'accès (AP2).

9. Procédé selon l'une quelconque des revendications 1 à 8 précédentes, **caractérisé par** l'attribution des ressources de réseau fournisseur de liaisons de prolongement local de façon à donner la priorité à un ou plusieurs terminaux (UE-X, UE-Y) d'utilisateur connectés au premier point d'accès.

10. Procédé selon l'une quelconque des revendications 1 à 9 précédentes, **caractérisé par** l'attribution des ressources de réseau fournisseur de liaisons de prolongement local de façon à donner la priorité à un ou plusieurs terminaux (UE2) d'utilisateur connectés au second point d'accès.

11. Procédé selon l'une quelconque des revendications 1 à 10 précédentes, **caractérisé en ce que** la quantité de ressources de réseau fournisseur de liaisons de prolongement local attribuée au point d'accès (AP1, AP2) est proportionnelle à un facteur respectif (k_{N1}, k_{N2}) de pondération.

12. Procédé selon l'une quelconque des revendications 1 à 11 précédentes, **caractérisé par** l'attribution des ressources de réseau fournisseur de liaisons de prolongement local au terminal (UE-X, UE-Y) d'utilisateur connecté au premier point d'accès (AP1) sur la base d'un contrat prédéfini entre un opérateur de réseau et un abonné.

13. Procédé selon l'une quelconque des revendications 1 à 12 précédentes, **caractérisé en ce que** le premier réseau d'accès (AN1) comprend un réseau maillé, dans lequel le procédé comprend :
la fourniture, par un terminal (UE-M2, UE-M3) d'utilisateur plus bas dans la hiérarchie, à au moins un terminal (UE-M1) d'utilisateur plus haut dans la hiérarchie, d'une information sur le nombre de terminaux actifs (UE-M4, UE-M5, UE-M6) d'utilisateur au-dessous du terminal (UE-M2, UE-M3) d'utilisateur plus bas dans la hiérarchie, dans la hiérarchie de réseau maillé ; et
l'attribution des ressources de réseau fournisseur de liaisons de prolongement local au réseau maillé sur la base du nombre total de terminaux actifs (UE-M1, UE-M2, UE-M3, UE-M4, UE-M5, UE-M6, UE-M7) d'utilisateur dans le réseau maillé.

14. Procédé selon l'une quelconque des revendications 1 à 13 précédentes, **caractérisé en ce que** le premier réseau d'accès (AN1) comprend un réseau local sans fil, WLAN (pour "Wireless Local Area Network").

15. Procédé selon l'une quelconque des revendications 1 à 14 précédentes, **caractérisé en ce que** le réseau (AN2) fournisseur de liaisons de prolongement local utilise l'accès par paquets de liaison descendante à grande vitesse, HSDPA (pour "High-Speed Downlink Packet Access"), l'interopérabilité mondiale pour accès hyperfréquence, WiMAX (pour "Worldwide interoperability for Microwave Access"), et/ou le multiplexage flash par répartition orthogonale en fréquence, flash-OFDM (pour "Orthogonal Frequency Division Multiplexing").

16. Système (S) de communication comprenant :
un premier point d'accès (AP1) d'un premier réseau sans fil (AN1) utilisant une première technique de radio ; et
un second point d'accès (AP2) d'un réseau (AN2) fournisseur de liaisons de prolongement local utilisant une seconde technique de radio, le second point d'accès (AP2) étant capable d'attribuer des ressources du réseau fournisseur de liaisons de prolongement local au premier point d'accès (AP1, UE1) et au second point d'accès (AP2),
**caractérisé en ce que** le système est constitué :
pour obtenir, par le premier point d'accès, une première information sur le nombre de terminaux (UE-X, UE-Y) d'utilisateur accédant au réseau (AN2) fournisseur de liaisons de prolongement local par l'intermédiaire du premier point d'accès (AP1) ;
pour fournir ladite première information par le premier point d'accès au second point d'accès (AP2) ; et
pour attribuer, par le second point d'accès, les ressources du réseau fournisseur de liaisons de prolongement local au premier point d'accès (AP1) et au second point d'accès (AP2) sur la base de ladite première information.

17. Système selon la revendication 16, **caractérisé en ce qu'**il est constitué pour attribuer les ressources de réseau fournisseur de liaisons de prolongement local au premier point d'accès (AP1) et au second point d'accès (AP2) sur la base du nombre de terminaux (UE-X, UE-Y) d'utilisateur connectés au premier point d'accès (AP1) de même que sur le nombre de terminaux (UE2) d'utilisateur connectés au second point d'accès (AP2).

18. Système selon la revendication 16 ou 17, **caractérisé en ce que** le premier point d'accès (AP1) est agencé :
pour vérifier le nombre de terminaux d'utilisateur communiquant avec le premier point d'accès (AP1) ; et
pour transmettre, au second point d'accès (AP2), la première information sur le nombre de terminaux d'utilisateur communiquant avec le premier point d'accès (AP1) ;
dans lequel le second point d'accès (AP2) est agencé :
pour recevoir ladite première information ; et
pour diviser, sur la base de ladite information, les ressources de réseau fournisseur de liaisons de prolongement local entre les terminaux d'utilisateur.

19. Système selon la revendication 16, 17 ou 18, **caractérisé en ce qu'**il est constitué pour mettre à jour l'information sur le nombre de terminaux (UE-X, UE-Y) d'utilisateur connectés au premier point d'accès (AP1) comme réponse à la détection d'un événement prédéfini dans le premier réseau d'accès (AN1).

20. Système selon la revendication 19, **caractérisé en ce que** l'événement prédéfini comprend la fin d'une session entre le premier point d'accès (AP1) et au moins un terminal (UE-X, UE-Y) d'utilisateur.

21. Système selon la revendication 19 ou 20, **caractérisé en ce que** l'événement prédéfini comprend l'ouverture d'une session entre le premier point d'accès (AP1) et au moins un terminal (UE-X, UE-Y) d'utilisateur.

22. Système selon l'une quelconque des revendications 16 à 21 précédentes, **caractérisé en ce qu'**il est constitué pour mettre à jour, à des intervalles prédéterminés de temps, l'information sur le nombre de terminaux d'utilisateur connectés au premier point d'accès (AP1).

23. Système selon l'une quelconque des revendications 16 à 22 précédentes, **caractérisé en ce qu'**il est constitué pour attribuer les ressources de réseau fournisseur de liaisons de prolongement local de manière égale entre les terminaux (UE-X, UE-Y) d'utilisateur connectés au premier point d'accès (AP1) et les terminaux (UE2) d'utilisateur connectés au second point d'accès (AP2).

24. Système selon l'une quelconque des revendications 16 à 23 précédentes, **caractérisé en ce qu'**il est constitué pour attribuer les ressources de réseau fournisseur de liaisons de prolongement local de façon à donner la priorité à un ou plusieurs terminaux (UE-X, UE-Y) d'utilisateur connectés au premier point d'accès (AP1).

25. Système selon l'une quelconque des revendications 16 à 24 précédentes, **caractérisé en ce qu'**il est constitué pour attribuer les ressources de réseau fournisseur de liaisons de prolongement local de façon à donner la priorité à un ou plusieurs terminaux (UE2) d'utilisateur connectés au second point d'accès (AP2).

26. Système selon l'une quelconque des revendications 16 à 25 précédentes, **caractérisé en ce qu'**il est constitué pour attribuer les ressources de réseau fournisseur de liaisons de prolongement local au point d'accès (AP1, AP2) de façon que la quantité de ressources attribuée soit proportionnelle à un facteur respectif (k_{N1}, k_{N2}) de pondération.

27. Système selon l'une quelconque des revendications 16 à 26 précédentes, **caractérisé en ce qu'**il est constitué pour attribuer les ressources de réseau fournisseur de liaisons de prolongement local au terminal (UE-X, UE-Y) d'utilisateur connecté au premier point d'accès (AP1) sur la base d'un contrat prédéfini entre un opérateur de réseau et un abonné.

28. Système selon l'une quelconque des revendications 16 à 27 précédentes, **caractérisé en ce que** le premier réseau d'accès (AN1) comprend un réseau maillé, dans lequel le système est constitué :
pour fournir, par un terminal (UE-M2, UE-M3) d'utilisateur plus bas dans la hiérarchie, à au moins un terminal (UE-M1) d'utilisateur plus haut dans la hiérarchie, une information sur le nombre de terminaux actifs (UE-M4, UE-M5, UE-M6) d'utilisateur au-dessous du terminal (UE-M2, UE-M3) d'utilisateur plus bas dans la hiérarchie, dans la hiérarchie de réseau maillé ; et
pour attribuer les ressources de réseau fournisseur de liaisons de prolongement local au réseau maillé sur la base du nombre total de terminaux actifs (UE-M1, UE-M2, UE-M3, UE-M4, UE-M5, UE-M6, UE-M7) d'utilisateur dans le réseau maillé.

29. Système selon l'une quelconque des revendications 16 à 28 précédentes, **caractérisé en ce que** le premier réseau d'accès (AN1) comprend un réseau local sans fil, WLAN.

30. Système selon l'une quelconque des revendications 16 à 29 précédentes, **caractérisé en ce que** le réseau (AN2) fournisseur de liaisons de prolongement local utilise l'accès par paquets de liaison descendante à grande vitesse, HSDPA, l'interopérabilité mondiale pour accès hyperfréquence, WiMAX, et/ou le multiplexage flash par répartition orthogonale en fréquence, flash-OFDM.

31. Premier point d'accès (AP1) pour un réseau d'accès sans fil utilisant une première technique de radio, **caractérisé en ce qu'**il est constitué :
pour obtenir une première information sur le nombre de terminaux (UE-X, UE-Y) d'utilisateur accédant, par l'intermédiaire du premier point d'accès (AP1), à un réseau (AN2) fournisseur de liaisons de prolongement local, le réseau (AN2) fournisseur de liaisons de prolongement local comprenant un second point d'accès (AP2) et utilisant une seconde technique de radio ; et
pour fournir ladite première information au second point d'accès (AP2).

32. Second point d'accès (AP2) d'un réseau (AN2) fournisseur de liaisons de prolongement local, **caractérisé en ce qu'**il est constitué :
pour recevoir une première information sur le nombre de terminaux (UE-X, UE-Y) d'utilisateur accédant, par l'intermédiaire d'un premier point d'accès (AP1) d'un premier réseau sans fil utilisant une première technique de radio, au réseau fournisseur de liaisons de prolongement local, le réseau fournisseur de liaisons de prolongement local utilisant une seconde technique de radio ; et
pour attribuer, sur la base de la première information, des ressources du réseau fournisseur de liaisons de prolongement local au premier point d'accès (AP1) et au second point d'accès (AP2).
